# EUROPÄISCHE PATENTSCHRIFT

(11) **EP 0 497 937 B1**
(45) Veröffentlichungstag und Bekanntmachung des Hinweises auf die Patenterteilung: **10.05.1995**
(21) Anmeldenummer: 91914034.3
(22) Anmeldetag: 09.08.1991
(51) Int. Cl.: F27B 7/20, C04B 7/43

(54) **ANLAGE ZUR THERMISCHEN BEHANDLUNG VON MEHLFÖRMIGEN ROHMATERIALIEN**
PLANT FOR THE HEAT TREATMENT OF POWDERY RAW MATERIALS
INSTALLATION POUR LE TRAITEMENT THERMIQUE DE MATIERES BRUTES FARINEUSES

(30) Priorität: 24.08.1990 DE 4026814
(43) Veröffentlichungstag der Anmeldung: 12.08.1992
(73) Patentinhaber: DEUTZ Aktiengesellschaft, 51063 Köln (DE)
(72) Erfinder: WOLTER, Albrecht, D-5000 Köln 1 (DE); BAUER, Claus, D-5000 Köln 90 (DE)
(86) Internationale Anmeldenummer: DE9100639
(87) Internationale Veröffentlichungsnummer: WO9203691

(56) Entgegenhaltungen:
- EP-A- 0 222 044
- EP-A- 0 327 717
- US-A- 3 964 922
- ZEMENT-KALK-GIPS Bd. 5, Nr. 1976, Seiten 193 - 197; H HERCHENBACH UND A.KUPPER: 'ZWEITFEUERUNGEN AN VIERSTUFIGEN ZYKLONVORWARMERN-ERGEBNISSE .....'
- Zement-Kalk-Gips, Nr. 7/1986, Seite 365.

## Beschreibung

Die Erfindung betrifft eine Anlage zur thermischen Behandlung von mehlförmigen Rohmaterialien, insbesondere bei der Herstellung von Zementklinker aus Rohmehl, wobei das Rohmehl in einem Brennprozeß durch Vorwärmen, Calcinieren, Sintern und Kühlen thermisch behandelt wird und der Abgasstrom der Sinterstufe und der Abluftstrom der Kühlstufe aus dem Klinkerkühler getrennt oder gemeinsam in der mit Brennstoff versorgten Calcinierstufe zur Calcination des Rohmehls genutzt werden, wobei die Gas-Feststoffsuspension in der Calcinierstufe umgelenkt und in den untersten Zyklon des Zyklonschwebegas-Wärmetauschersystems zwecks Abtrennung des calcinierten Rohmehls vom Gasstrom eingeführt wird.

Um bei Anlagen zur Herstellung von Zementklinker aus Zementrohmehl unwirtschaftlich lange und/oder im Durchmesser große Drehrohröfen zu vermeiden und den spezifischen Wärmebedarf des Zementklinkerherstellungsprozesses niedrig zu halten, ist es bekannt, dem Drehrohrofen materialflußseitig gesehen einen Calcinator vorzuschalten, der mit einer Zweitfeuerung (neben der Feuerung im Drehrohrofen) ausgestattet ist. In der Zweitfeuerung entzündet sich der zugeführte Brennstoff jeglicher Art und wird in der Regel mit vom Klinkerkühler kommenden heißen Abluft, Tertiärluft genannt, möglichst vollständig verbrannt. Die entstehende Verbrennungswärme wird augenblicklich auf das Rohmehl übertragen und zur weiteren Calcinierung des Rohmehls noch vor Einführung in den Drehrohrofen verwendet, wobei die Temperatur nicht wesentlich über die Dissoziationstemperatur der Entkarbonatisierungsreaktion steigt.

Ist der in den Calcinator zugefeuerte Brennstoff ein Festbrennstoff, z. B. Kohlenstaub, und ist dieser nicht ausreichend fein gemahlen und/oder enthält dieser schwerbrennende Anteile wie z. B. Anthrazit, so ist die Gefahr nicht ausgeschlossen, daß der Brennstoff im Calcinator nicht vollständig ausbrennt, weil die Verweilzeit der unverbrannten Bestandteile, nämlich nicht ausreichend ausgebrannte Festbrennstoffpartikel und/oder z. B. durch unvollständige Verbrennung gebildetes CO, im Calcinator zu kurz werden kann. In den meisten Fällen gelang es, den Restausbrand dieser zunächst nicht vollständig verbrannten Bestandteile durch eine besondere konstruktive Gestaltung der Brennstrecke des Calcinators, nämlich durch eine Umlenkung der Calcinatorbrennstrecke bzw. der Drehofenabgassteigleitung in einem Winkel von z. B. 90 bis 180° zu bewerkstelligen, weil in dem Rohrleitungskrümmer noch eine Vermischung der Restbrennstoffe mit Luftsauerstoff zur Förderung des Restausbrandes bei vertretbar niedrigem Druckverlust erfolgt. Es hat sich aber in der Praxis gezeigt, daß es Fälle gibt, bei denen der Rohrleitungskrümmer allein nicht genügt, den Restausbrand der unverbrannten Umsetzungsprodukte des Calcinatorbrennstoffs zu erreichen, besonders beim Einsatz schwerbrennbarer Kohlesorten und/oder auch bei schwankender Festbrennstoffzudosierung zum Calcinator, welche durch die Brennanlage durchlaufende Stöße an CO und unverbrannten Brennstoffpartikeln zur Folge hat.

Auch bei Zementklinkerproduktionslinien mit Calcinator und mit unterstöchiometrischer Brennstoffverbrennung in der Drehofenabgassteigleitung zwecks Schaffung einer CO-haltigen Reduktionszone zur Reduzierung des im Abgas enthaltenen NOₓ (EP-PS 0 222 044) muß dafür gesorgt werden, daß das in der Reduktionszone katalytisch wirkende CO sowie gegebenenfalls auch die im Calcinator zunächst nicht verbrannten Festbrennstoffpartikel noch im Calcinator selbst die Gelegenheit erhalten, vollständig verbrennen zu können.

Zur Beeinflussung der Rohmehlcalcinierung in einer Zementklinkerproduktionslinie mit Zweitfeuerung in der als Calcinator ausgebildeten Drehofenabgassteigleitung (Zeitschrift "Zement-Kalk-Gips" Heft 5/1976, Seiten 193 bis 197, insbesondere Seite 194 Bild 2) ist vorgeschlagen worden, von dem Rohmehl, das bereits einmal den Calcinator (Drehofenabgassteigleitung) durchlaufen hat und das anschließend im untersten Zyklon des Wärmetauschersystems vom Gas abgeschieden und in die Drehofeneinlaufkammer eingeführt wird, einen Teilstrom nach Austritt aus dem untersten Zyklon abzutrennen und in den Calcinator (Drehofenabgassteigleitung) zu rezirkulieren. Wörtlich heißt es dazu aber in dieser Fachzeitschrift auf Seite 194 rechte Spalte, letzter Absatz: "Es zeigte sich, daß eine bessere Entsäuerung des Materials mit Rezirkulation nicht eintrat". In der Tat haben sich solche Anlagen in der Praxis auch nicht durchgesetzt. Im übrigen wäre bei der bekannten Rezirkulationsanlage ein vollständiger Ausbrand bzw. Restausbrand insbesondere unverbrannt gebliebener gasförmiger Brennstoffbestandteile wie z. B. CO im Calcinator nicht möglich.

Auch das sogenannte SCS-Verfahren von Sumitomo (Zeitschrift "Zement-Kalk-Gips" Heft 7/1986, Seite 365) offenbart nicht einen Rohr-Calcinator, bei welchem die Gas-Feststoffsuspension aus einem aufsteigenden Rohrleitungsast um etwa 180° in einen absteigenden Rohrleitungsast umgelenkt werden würde, sondern einen Topf-Calcinierreaktor, in den seitlich vorerhitztes Zementrohmehl und Brennstoff sowie von unten vom Klinkerkühler kommende Tertiärluft eingeführt werden. Die Gas-Feststoffsuspension wird am Austritt des Calcinierreaktors in einen "Rückführungszyklon" genannten kleinen Staubsammeltrichter eingeführt, aus welchem abgeschiedener Staub in den Calcinierreaktor rezirkuliert wird. In diesem kleinen Staubsammeltrichter ist eine wirkungsvolle Vermischung der im Topf-Calcinator unverbrannt gebliebenen Komponenten mit Luftsauerstoff nicht möglich. Weil es sich beim bekannten Calcinierreaktor nicht um einen Rohr-Calcinator mit 180°-Rohrleitungskrümmer handelt, kann der "Rückführungszyklon" genannte Staubsammeltrichter im Anschluß an den Calcinierreaktor auch nicht dazu dienen, die Gesamtlänge bzw. die Bauhöhe eines Rohr-Calcinators deutlich zu verringern und trotzdem auch bei schwerbrennendem Festbrennstoff einen vollständigen Ausbrand der Brennstoffkomponenten im Calcinator einer Zementklinkerproduktionslinie zu erreichen.

Der Erfindung liegt die Aufgabe zugrunde, bei Zementklinkerproduktionslinien der oben beschriebenen Art mit dem Drehrohrofen vorgeschaltetem, mit einer Zweitfeuerung ausgestatteten Calcinator einen wärmewirtschaftlich günstigen möglichst vollständigen Ausbrand bzw. Restausbrand unverbrannter Brennstoffbestandteile wie z. B. CO im Calcinator zu ermöglichen, und zwar anwendbar bei Calcinatoren mit oder ohne Einrichtungen zur Reduktion des im Ofenabgas enthaltenen NOₓ.

Diese Aufgabe wird gemäß der Erfindung mit den Maßnahmen des Kennzeichnungsteiles des Anspruchs 1 gelöst.

Charakteristisch für die erfindungsgemäße Zementklinkerproduktionslinie ist, daß im Calcinator etwa an der Stelle, an der bisher ein Rohrleitungskrümmer mit Umlenkung der Gas-Feststoffsuspension um z. B. 180°, also etwa im Bereich der höchsten Stelle des Calcinators eine Wirbelkammer angeordnet ist, die eine sehr gute Vermischung des in der Gas-Feststoffsuspension des Calcinators enthaltenen CO sowie der gegebenenfalls enthaltenen nicht verbrannten Brennstoffpartikel und Luftsauerstoff ermöglicht, wodurch das CO sowie die Brennstoffpartikel vollständig noch im Calcinator verbrennen können. Die Wirbelkammer kann eine Öffnung zum tangentialen Eintritt der Gas-Feststoffsuspension und eine Öffnung zum tangentialen Austritt auf weisen, wobei die Eintrittsöffnung an den aufsteigenden Ast und die Austrittsöffnung an den absteigenden Ast der Calcinierstufe angeschlossen sind. Durch den auf diese Weise in der Wirbelkammer erzielbaren Wirbelstrom ist die Vermischung unverbrannt gebliebenen Brennstoffpartikel mit sauerstoffhaltigen Luftströmen im Calcinator möglich, wodurch der vollständige Ausbrand dieser Brennstoffkomponenten (auch CO) im Calcinator gewährleistet ist. Es wird die Möglichkeit eröffnet, die Brennstrecke beim erfindungsgemäßen Calcinator gegenüber bisher üblichen Calcinatoren zu verkürzen, d. h. durch einen einfachen Umbau eines bereits vorhandenen Calcinators mit Rohrleitungskrümmer, der die Gas-Feststoffsuspension vom aufsteigenden Rohrleitungsast um etwa 180° in den absteigenden Rohrleitungsast umlenkt, in eine Anlage mit Calcinator mit Wirbelkammer, oder aber auch bei einem Neubau läßt sich die Bauhöhe des erfindungsgemäßen Calcinators erheblich niedriger halten als bei bisher bekannten Calcinatoren. In Zahlen ausgedrückt ist durch die Erfindung eine Reduzierung der Gesamtlänge bzw. der Bauhöhe des Calcinators um etwa 20 % durchaus möglich.

Infolge des auch bei schwerbrennendem Festbrennstoff vollständigen Ausbrandes der Brennstoffkomponenten im Calcinator der erfindungsgemäßen Zementklinkerproduktionslinie ist diese durch einen besonders niedrigen spezifischen Wärmebedarf bei gleichzeitigem hohen Calcinationsgrad des Zementrohmehles von z. B. etwa 95 % gekennzeichnet, und zwar auch dann, wenn die Zementklinkerproduktionslinie im Bereich des Calcinators noch mit einer Einrichtung zur Reduktion des im Abgas enthaltenen NOₓ ausgestattet ist, was weiter unten noch näher erläutert wird.

Nach einem besonderen Merkmal der Erfindung wird in der Wirbelkammer der Calcinierstufe wenigstens ein Teil wenigstens der Grobkornanteile aus der Gas-Feststoffsuspension abgetrennt, indem im unteren Bereich der Wirbelkammer ein Feststoffsammelbehälter angeordnet ist, dessen Feststoffaustragsöffnung über eine oder mehrere Feststoffrezirkulationsleitungen mit insbesondere in der Höhenlage variablen Feststoffeintragsöffnungen des aufsteigenden und/oder absteigenden Astes der Calcinierstufe in Verbindung steht. Durch die Separierung wenigstens der Grobkornanteile aus der Gas-Feststoffsuspension in der Wirbelkammer und Rezirkulierung dieser Partikel in den aufsteigenden Ast der Calcinierstufe wird die Verweilzeit und Vermischung dieser Partikel in der Calcinierstufe gesteigert, wodurch ein vollständiger Ausbrand der nach dem ersten Durchgang durch den Calcinator unverbrannt gebliebenen Partikel ermöglicht wird. Denn grobe Brennstoffpartikel brauchen mehr Zeit zum vollständigen Ausbrand als feine Partikel. In ähnlicher Weise benötigen grobe Zementrohmaterialpartikel in Abhängigkeit von ihrer mineralogischen Zusammensetzung mehr Zeit zur Entsäuerung als feine Rohmehlpartikel, wodurch auch der mit der Erfindung erzielbare hohe Calcinationsgrad des Zementrohmateriales in der Calcinierstufe erklärbar ist.

Bei Einführung des in der Wirbelkammer der erfindungsgemäßen Anlage aus der Gas-Feststoffsuspension zwischenabgeschiedenen Feststoffmaterials in den absteigenden Ast der Calcinierstufe kann in diesem Ast im Bereich zwischen der Wirbelkammer-Gasaustrittsöffnung und der Wiedereinführung des abgeschiedenen Feststoffmateriales eine Zone erhöhter Temperatur erzeugt werden, weil ja nach der Feststoffabtrennung der Restausbrand von zunächst noch unverbrannt gebliebenem CO im absteigenden Ast der Calcinierstufe weiter vonstatten geht. Die in dieser Zone geschaffene erhöhte Temperatur von z. B. 1.000° C, die oberhalb der Dissoziationstemperatur des im Zementrohmaterial enthaltenen CaCo₃ liegt, kann dazu ausgenutzt werden, um irgendwelche Hochtemperaturreaktionen durchzuführen, wie Eindüsung von Reaktanten wie z. B. NH₃ oder Ammoniakwasser zwecks zusätzlicher Absenkung des in den Abgasen enthaltenen NOₓ und/oder Einführung von sehr schwer brennendem Brennstoff wie z. B. niederflüchtige Kohlen zum Zwecke derer Verbrennung.

Durch das Aufgeben des in der Wirbelkammer separierten Feststoffmaterials auf den aufsteigenden und/oder absteigenden Calcinatorast, gegebenenfalls an mehreren Aufgabestellen, können eine zusätzliche Vergleichmäßigung der Suspensions-Strömung erreicht und Pulsationen des Gesamtsystems unterbunden werden.

Die Erfindung und deren weitere Merkmale und Vorteile werden anhand der in den Figuren schematisch dargestellten Ausführungsbeispiele näher erläutert.

Es zeigt:
- Fig. 1: eine schematische Ansicht der erfindungsgemäßen Zementklinkerproduktionslinie mit in der Calcinierstufe angeordneter Wirbelkammer;
- Fig. 2: ausschnittsweise vergrößert die Ansicht der in die Calcinierstufe integrierten Wirbelkammer mit daran angeschlossenem aufsteigenden und absteigenden Ast der Calcinierstufe, und
- Fig. 3: die Draufsicht auf die Wirbelkammer der Fig. 2.

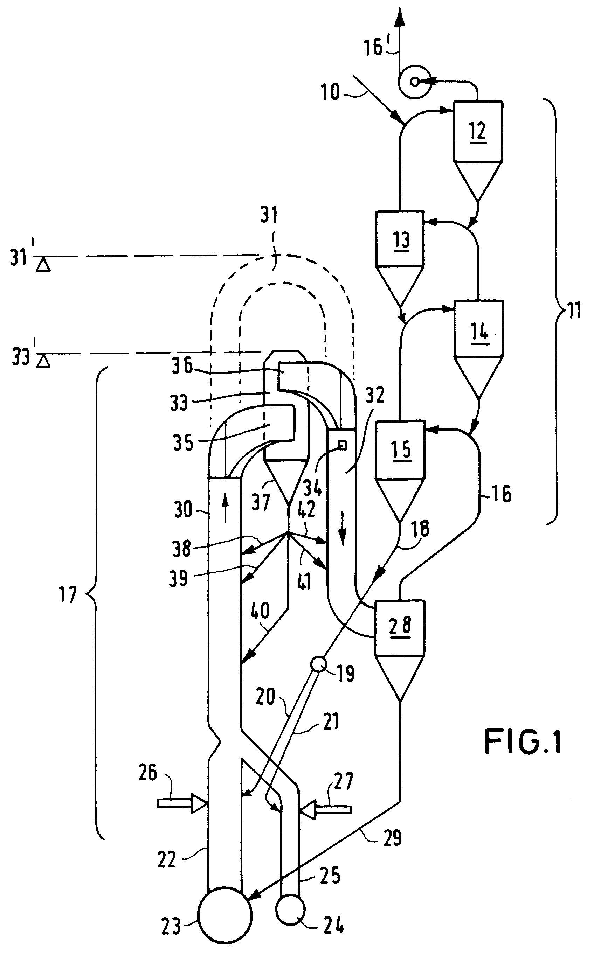

Fig. 1 zeigt in schematischer Darstellung eine Anlage zur Herstellung von Zementklinker aus Zementrohmehl, das bei (10) in die Vorwärmstufe (11) aufgegeben wird, wo es nacheinander die Zyklonschwebegaswärmetauscher (12 bis 15) im kombinierten Gleich/Gegenstrom zum heißen Abgas (16) der Calcinierstufe (17) durchwandert, um im Abscheidezyklon (15) aus dem Gasstrom ausgeschieden und durch die Zuführleitung (18) in der Rohmehlweiche (19) auf die beiden Gutzuführleitungen (20 und 21) aufgeteilt zu werden. Das am Zementrohmehl abgekühlte Abgas verläßt die Vorwärmstufe (11) der Anlage bei (16′).

Während die Rohmehlleitung (20) in die Abgassteigleitung (22) des Drehrohrofens (23) einmündet, mündet die Rohmehlleitung (21) in die vom Klinkerkühler (24) kommende Tertiärluftleitung (25) ein. Etwa im Bereich der Rohmehleinführung ist die Drehofenabgassteigleitung (22) mit einer Brennstoffzuführung (26) und die Tertiärluftleitung (25) mit einer Brennstoffzuführung (27) versehen. Das in der Calcinierstufe (17) calcinierte (entsäuert) Zementrohmehl wird im Zyklon (28) vom heißen Abgasstrom (16) abgetrennt und als hochgradig (z. B. 95 %) calciniertes Zementrohmehl (29) in den Drehrohrofen (23) eingeführt, in dessen Sinterzone es zu Zementklinker gebrannt wird.

Während der Brennstoff (27), z. B. Kohlenstaub, in der Tertiärluft (25) mit Sauerstoffüberschuß verbrannt wird, wird der Brennstoff (26), z. B. ebenfalls Kohlenstaub, in der Drehofenabgassteigleitung (22) unterstöchiometrisch verbrannt zwecks Bildung einer sich von der Brennstoffeinführung (26) nach oben anschließenden CO-haltigen Reduktionszone, in welcher der im heißen Drehofenabgas enthaltene NOₓ-Anteil reduziert wird. Die Abgase des Brenners (26) und des Brenners (27) werden im aufsteigenden Rohrleitungsast (30) zusammengefaßt. Beim bisher bekannten Stand der Technik werden die Abgase über den gestrichelt gezeichneten Rohrleitungskrümmer (31) sowie über einen absteigenden Rohrleitungsast (32) dem untersten Zyklon (28) zugeleitet.

Erfindungsgemäß ist in der Calcinierstufe (17) im Bereich ihrer Strömungsumlenkung, d. h. etwa in deren höchstgelegenem Bereich eine Wirbelkammer (33) mit Abtrennung wenigstens eines Teils wenigstens der Grobkornanteile aus der Gas-Feststoffsuspension angeordnet. In der Wirbelkammer (33), die nur einen sehr geringen zusätzlichen Druckverlust verursacht, erfolgt eine intensive Vermischung der im aufsteigenden Rohrleitungsast (30) ankommenden Gas-Feststoffsuspension mit Luftsauerstoff aus dem Klinkerkühler, was einen vollständigen Ausbrand bzw. vollständigen Restausbrand der im absteigenden Ast (32) der Calcinierstufe (17) noch vorhandenen Brennstoffe zur Folge hat. Es versteht sich, daß mit dem vollständigen Brennstoffausbrand in der Calcinierstufe (17) ein niedriger spezifischer Wärmebedarf bzw. eine gesteigerte Wärmewirtschaftlichkeit der erfindungsgemäßen Zementklinkerproduktionslinie verbunden ist. Außerdem ist aus Fig. 1 deutlich zu ersehen, daß die Bauhöhe (33′) des erfindungsgemäßen Calcinators (17) mit Wirbelkammer (33) erheblich niedriger liegt, z. B. um ca. 20 %, als die Bauhöhe (31′) bisher bekannter Calcinatoren mit (gestrichelt gezeichnetem) Rohrleitungskrümmer (31).

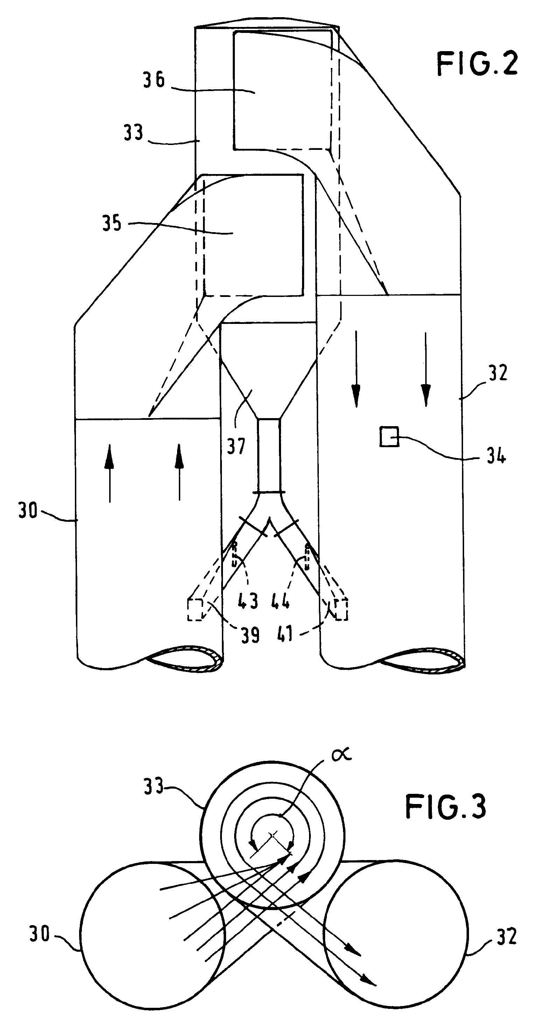

Wie auch aus Fig. 2 ersichtlich kann die in die Calcinierstufe (17) eingebaute Wirbelkammer (33) eine Öffnung (35) zum tangentialen Eintritt der Gas-Feststoffsuspension und eine Öffnung (36) zum tangentialen Austritt aufweisen, wobei die Eintrittsöffnung (35) an den aufsteigenden Ast (30) und die Austrittsöffnung (36) an den absteigenden Ast (32) der Calcinierstufe (17) angeschlossen sind. Der Durchmesser der Wirbelkammer (33) kann etwa das 1- bis 2-fache des Durchmessers der gasführenden Rohrleitungen (30, 32) der Calcinierstufe (17) betragen.

Nach einem besonderen Merkmal der Erfindung ist im unteren Bereich der Wirbelkammer (33) ein Feststoffsammelbehälter (37) angeordnet, dessen Feststoffaustragsöffnung über eine oder mehrere Feststoffrezirkulationsleitungen (38 bis 42) mit in der Höhenlage variablen Feststoffeintragsöffnungen des aufsteigenden Astes (30) und/oder absteigenden Astes (32) der Calcinierstufe (17) in Verbindung steht. Damit wird eine Verlängerung der Verweilzeit insbesondere der grobkörnigen schwerbrennenden Brennstoffanteile und deren vollständige Verbrennung noch innerhalb der Calcinierstufe (17) ermöglicht.

Bei Einführung des in der Wirbelkammer (33) zwischenabgeschiedenen Feststoffes (37) über Leitung (41 und/oder 42) in den absteigenden Ast (32) der Calcinierstufe (17) wird in diesem Ast (32) im Bereich zwischen der Wirbelkammer-Gasaustrittsöffnung (36) und der Wiedereinführung des abgeschiedenen Feststoffmateriales (41, 42) in den Gasstrom eine Zone erhöhter Temperatur erzeugt, weil nach der Feststoffabtrennung aus der Gas-Feststoffsuspension in der Calcinierstufe (17) der vollständige Ausbrand insbesondere der gasförmigen Brennstoffanteile wie z. B. CO weiter vonstatten geht mit der Folge, daß in dieser Zone des absteigenden Astes (32) eine Abgasaufheizung von z. B. etwa 850° C auf z. B. etwa 1.050° C möglich wird. Die auf diese Weise geschaffene Zone erhöhter Temperatur kann für eine Hochtemperaturreaktion ausgenutzt werden, indem diese Zone z. B. mit einer Einrichtung zur Einführung insbesondere von schwerbrennendem Brennstoff (z. B. niederflüchtige Kohlen) und/oder von Reaktanten wie NH₃ oder Ammoniakwasser zwecks zusätzlicher Absenkung des in den Abgasen enthaltenen NOₓ ausgestattet ist.

Insbesondere im absteigenden Ast (32) der Calcinierstufe (17) (also in Strömungsrichtung nach der Wirbelkammer (33)) kann wenigstens eine Temperaturmeßeinrichtung (34) angeordnet sein, die mit einem oder mehreren Stellorganen, z. B. Steuerklappen (43 bzw. 44) zur Steuerung der aus der Wirbelkammer (33) ausgeschleusten und in den aufsteigenden und/oder absteigenden Ast (30 bzw. 32) der Calcinierstufe eingeschleusten Feststoffmenge in Wirkverbindung steht. Bei steigender Gastemperatur kann die Feststoffrezirkulationsmenge erhöht werden, und umgekehrt. Die Rezirkulationsrate kann z. B. etwa das 0,5- bis 3-fache der Feststoffmenge betragen, welcne durch die Calcinierstufe (17) ohne Rezirkulierung geschleust wird. Allein schon mit der Zwischenabtrennung wenigstens eines Teils des Feststoffmateriales in der Wirbelkammer (33) und Rezirkulierung des Materiales in die Gas-Feststoffsuspension ist eine bessere Vermischung der Reaktionspartner in der Calcinierstufe (17) verbunden.

Es versteht sich, daß die Erfindung auch anwendbar ist bei üblichen Calcinatoren, bei denen der Rohmehlstrom (18) ungeteilt in die Drehofenabgassteigleitung (22) eingeführt ist.

In den Figuren 2 und 3 sind die gegenüber Fig. 1 gleichen Bauteile mit entsprechend gleichen Bezugsziffern versehen. Der in Fig. 3 angezeigte Winkel a kann z. B. 270° betragen. Es versteht sich, daß die Wirbelkammer (33) durch eine nicht dargestellte, die Äste (30 und 32) verbindende BypassLeitung umgangen werden kann.

## Patentansprüche

1. Anlage zur thermischen Behandlung von mehlförmigen Rohmaterialien, insbesondere bei der Herstellung von Zementklinker aus Rohmehl, wobei das Rohmehl in einem Brennprozeß durch Vorwärmen, Calcinieren, Sintern und Kühlen thermisch behandelt wird, und der Abgasstrom der Sinterstufe und der Abluftstrom der Kühlstufe aus dem Klinkerkühler getrennt oder gemeinsam in der mit Brennstoff versorgten Calcinierstufe (17) zur Calcination des Rohmehls genutzt werden, wobei die Gas-Feststoffsuspension in der Calcinierstufe (17) aus einem aufsteigenden Rohrleitungsast (30) in einen absteigenden Rohrleitungsast (32) umgelenkt und in den untersten Zyklon des Zyklonschwebegas-Wärmetauschersystems zwecks Abtrennung des calcinierten Rohmehls vom Gasstrom eingeführt wird, dadurch gekennzeichnet, daß in der Calcinierstufe (17) im Bereich ihrer Strömungsumlenkung eine Wirbelkammer (33) mit Abtrennung wenigstens eines Teils wenigstens von Grobkornanteilen (37) aus der Gas-Feststoffsuspension und Wiedereinführung des abgetrennten Feststoffanteils in den der Wirbelkammer (33) strömungsseitig vorgeschalteten und/oder nachgeschalteten Ast (30 bzw. 32) der Calcinierstufe (17) angeordnet ist.

2. Anlage nach Anspruch 1, dadurch gekennzeichnet, daß die Wirbelkammer (33) etwa in den höchstgelegenen Bereich der mit aufsteigendem Rohrleitungsast (30) und mit absteigendem Rohrleitungsast (32) ausgebildeten Calcinierstufe (17) eingebaut ist.

3. Anlage nach Anspruch 2, dadurch gekennzeichnet, daß die Wirbelkammer (33) eine Öffnung (35) zum tangentialen Eintritt der Gas-Feststoffsuspension und eine Öffnung (36) zum tangentialen Austritt aufweist, wobei die Eintrittsöffnung (35) an den aufsteigenden Ast (30) und die Austrittsöffnung (36) an den absteigenden Ast (32) der Calcinierstufe (17) angeschlossen sind.

4. Anlage nach einem der Ansprüche 1 bis 3, dadurch gekennzeichnet, daß im unteren Bereich der Wirbelkammer (33) ein Feststoffsammelbehälter (37) angeordnet ist, dessen Feststoffaustragsöffnung über eine oder mehrere Feststoffrezirkulationsleitungen (38 bis 42) mit in der Höhenlage variablen Festoffeintragsöffnungen des aufsteigenden und/oder absteigenden Astes der Calcinierstufe (17) in Verbindung steht.

5. Anlage nach einem oder mehreren der Ansprüche 1 bis 4, dadurch gekennzeichnet, daß der Durchmesser der Wirbelkammer (33) das 1- bis 2-fache des Durchmessers der gasführenden Rohrleitungen (30, 32) der Calcinierstufe (17) beträgt.

6. Anlage nach einem oder mehreren der Ansprüche 1 bis 5, dadurch gekennzeichnet, daß bei Wiedereinführung des in der Wirbelkammer (33) zwischenabgeschiedenen Feststoffes (41, 42) in den absteigenden Ast (32) der Calcinierstufe (17) in diesem Ast im Bereich zwischen der Wirbelkammer-Gasaustrittsöffnung (36) und der Wiedereinführung des abgeschiedenen Feststoffmateriales eine Zone erhöhter Temperatur erzeugt wird.

7. Anlage nach Anspruch 6, dadurch gekennzeichnet, daß die Zone erhöhter Temperatur mit einer Einrichtung zur Einführung insbesondere von schwerbrennendem Brennstoff und/oder zur Eindüsung von Reaktanten wie NH₃ oder Ammoniakwasser zwecks zusätzlicher Absenkung des in den Abgasen enthaltenen NOₓ ausgestattet ist.

8. Anlage nach einem oder mehreren der Ansprüche 1 bis 7, dadurch gekennzeichnet, daß in den aufsteigenden Ast der Calcinierstufe (17) in die Drehofenabgasleitung (22), bevor die vom Klinkerkühler (24) kommende Tertiärluft (25) zugemischt wird, ein Brenner (26) mit unterstöchiometrischer Brennstoffverbrennung einmündet zwecks Schaffung einer CO-haltigen Reduktionszone zur NOₓ-Reduktion im Abgas.

9. Anlage nach einem der Ansprüche 1 bis 8,dadurch gekennzeichnet, daß im absteigenden Ast (32) der Calcinierstufe (17) (in Strömungsrichtung nach der Wirbelkammer (33)) wenigstens eine Temperaturmeßeinrichtung (34) angeordnet ist, die mit einem oder mehreren Stellorganen (43 bzw. 44) zur Steuerung der aus der Wirbelkammer (33) ausgeschleusten und in den aufsteigenden und/oder absteigenden Ast (30 bzw. 32) der Calcinierstufe eingeschleusten Feststoffmenge in Wirkverbindung steht.

## Claims

1. A plant for the thermal treatment of powdery raw materials, especially in the production of cement clinker from raw powder, wherein the raw powder is thermally treated in a burning process through pre-warming, calcination, sintering and cooling and the waste gas stream from the sintering stage and the exhaust air stream from the cooling stage of the clinker cooler are used separately or together in the calcining section (17) , to which fuel is fed, for the calcination of the raw powder, with the gas-solids suspension diverted in the calcining section (17) from an ascending pipe branch (30) into a descending pipe branch (32) and introduced into the lowest cyclone of the cyclone suspension-type heat exchanger system to separate the calcinated raw powder from the gas stream, characterised in that a turbulence chamber (33) is arranged in the calcining section (17) in the region of its flow diversion with separation of at least a part of at least the coarse grain fraction (37) from the gas-solids suspension and with reintroduction of the separated solid fraction into the branch (30 or 32) of the calcining section (17) arranged upstream and/or downstream on the flow side of the turbulence chamber (33).

2. A plant according to claim 1, characterised in that the turbulence chamber (33) is arranged approximately in the highest region of the calcining section (17) provided with an ascending pipe branch (30) and a descending pipe branch (32).

3. A plant according to claim 2, characterised in that the turbulence chamber (33) is provided with an aperture (35) for the tangential entry of the gas-solids suspension and an aperture (36) for tangential discharge, with the inlet aperture (35) connected to the ascending branch (30) and the discharge aperture (36) connected to the descending branch (32) of the calcining section (17).

4. A plant according to any one of claims 1 to 3, characterised in that a solid material collecting vessel (37) is arranged in the lower region of the turbulence chamber (33), with the solid material discharge outlet of the said vessel (37) connected via one or more solid material recirculating pipes (38 to 42) to the solid material inlet ports, variable in their height, of the ascending branch and/or the descending branch of the calcining section (17).

5. A plant according to one or more of claims 1 to 4, characterised in that the diameter of the turbulence chamber (33) is one to two-fold the diameter of the gas-conducting pipes (30, 32) of the calcining section (17).

6. A plant according to one or more of claims 1-5, characterised in that the reintroduction of solid material (41, 42) already separated in the turbulence chamber (33) into the descending branch (32) of the calcining section (17) creates in this branch a zone of elevated temperature in the region between the turbulence chamber gas outlet aperture (36) and the reintroduction of the separated solid material.

7. A plant according to claim 6, characterised in that the zone of higher temperature is provided with a device for the introduction especially of poorly-combustible fuel and/or reactants such as NH₃ or NH₄OH for the additional lowering of the level of NOₓ in the waste gases.

8. A plant according to one or more of claims 1 to 7, characterised in that a burner (26) with sub-stoichiometric fuel combustion
opens into the ascending branch of the calcining section (17) in the rotary kiln waste gas pipe (22) before admixing of the tertiary air (25) from the clinker cooler (24), in order to create a CO-containing reduction zone for reduction of NOₓ in waste gas.

9. A plant according to any one of claims 1 to 8, characterised in that at least one temperature measuring device (34) is arranged in the descending branch (32) of the calcining section (37) (in the direction of flow following the turbulence chamber (33)), the said device (34) being in effective connection with one or a plurality of control organs (43/44) for the control of the quantity of solid material discharged from the turbulence chamber (33) and fed to the ascending and/or descending branch (30/32) of the calcining section.

## Revendications

1. Installation de traitement thermique de matières premières pulvérulentes, utilisée en particulier dans la fabrication de clinker de ciment à partir de poudre brute soumise, dans le cadre d'un procédé de cuisson, à un préchauffage, une calcination, un frittage et un refroidissement, les gaz issus de l'étage de frittage et l'air sortant de l'étage de refroidissement du refroidisseur de clinker étant utilisés ensemble ou séparément dans l'étage de calcination (17) alimenté en combustible pour calciner la poudre brute, la suspension matières solides/gaz étant déviée à cet étage (17) par passage d'une branche tubulaire ascendante (30) à une branche tubulaire descendante (32), et envoyée au cyclone situé tout en bas du système de préchauffage par mise en suspension dans les gaz, afin de séparer du courant gazeux la poudre brute calcinée, caractérisée en ce que dans l'étage de calcination (17), au niveau de la dérivation du courant gazeux, est installée une chambre de turbulence (33) séparant au moins en partie au moins les particules solides les plus grosses (37) contenues dans la suspension solides/gaz, ces particules séparées étant introduites dans la branche (30) de l'étage de calcination (17) située, par rapport au sens d'écoulement, en amont de la chambre de turbulence (33) et/ou dans la branche (32) située en aval.

2. Installation selon la revendication 1, caractérisée en ce que la chambre de turbulence (33) est placée sensiblement au niveau le plus haut de l'étage de calcination (17) constitué de la branche tubulaire ascendante (30) et de la branche tubulaire descendante (32).

3. Installation selon la revendication 2, caractérisée en ce que la chambre de turbulence (33) comporte une ouverture (35) d'entrée tangentielle de la suspension solides/gaz, et une ouverture (36) de sortie tangentielle, ces ouvertures (35) et (36) étant raccordées respectivement à la branche descendante (30) et à la branche descendante (32) de l'étage de calcination.

4. Installation selon l'une des revendications 1 à 3, caractérisée en ce qu'à la partie inférieure de la chambre de turbulence (33) est placé un récipient (37) collecteur de matières solides, dont l'orifice d'extraction est relié par une ou plusieurs conduites de recyclage de solides (38 à 42), à des ouvertures, variables en hauteur, d'introduction des solides dans la branche ascendante et/ou la branche descendante de l'étage de calcination.

5. Installation selon l'une ou plusieurs des revendications 1 à 4, caractérisée en ce que le diamètre de la chambre de turbulence (33) est de une à deux fois celui des conduites tubulaires (30, 32) transportant les gaz de l'étage de calcination (17).

6. Installation selon l'une ou plusieurs des revendications 1 à 5, caractérisée en ce que la réintroduction des matières solides (41, 42) qui ont été séparées dans la chambre de turbulence (33), dans la branche ascendante (32) de l'étage de calcination (17), crée dans cette branche, entre l'ouverture (36) de sortie des gaz de la chambre de turbulence et le point de réintroduction des solides séparés, une zone à température plus élevée.

7. Installation selon la revendication 6, caractérisée en ce que la zone à température plus élevée est équipée d'un dispositif pour introduire en particulier des combustibles brûlant difficilement, et/ou pour insuffler des produits réactifs tels que de l'ammoniac gazeux ou en solution, afin de réduire la teneur en NOₓ des gaz d'échappement.

8. Installation selon l'une ou plusieurs des revendications 1 à 7, caractérisée en ce que, dans la branche ascendante de l'étage de calcination (17) située dans la conduite d'échappement (22) du four tournant (24), un brûleur (26) débouche en amont du point où l'air tertiaire (25) venant du refroidisseur de clinker se mélange aux gaz d'échappement du four, le fonctionnement du brûleur étant substoechiométrique de manière à créer une zone contenant du CO servant à réduire le NOₓ contenu dans les gaz d'échappement.

9. Installation selon l'une des revendications 1 à 8, caractérisée en ce que, dans la branche ascendante (32) de l'étage de calcination située en aval de la chambre de turbulence (33) par rapport au sens de l'écoulement, est monté un appareil de mesure de température (34) coopérant avec un ou plusieurs organes de réglage (43 et 44) de manière à commander le débit des matières solides sortant de la chambre de turbulence et introduites dans la branche ascendante (30) et/ou dans la branche descendante de l'étage de calcination.
